# EUROPEAN PATENT APPLICATION

(11) **EP 1 795 329 A1**
(43) Date of publication of application: **13.06.2007**
(21) Application number: 05026465.4
(22) Date of filing: 05.12.2005
(51) Int. Cl.: B29C 51/08, B29C 51/42

(54) **Method and apparatus for making molded elastomer**

(71) Applicant: Huang, Huel-Rong, Sinjhuang City Taipei County 242 (TW)
(72) Inventor: Huang, Huel-Rong, Sinjhuang City Taipei County 242 (TW)
(74) Representative: Flaccus, Rolf-Dieter

(57) **Abstract**

A method and apparatus for making a molded elastomer are provided. The method includes providing an eIastic fiber foam (100); disposing the elastic fiber foam between a first upper mold (220) and a first lower mold (230); pressing the elastic fiber foam by the first upper mold and the first lower mold; and applying a first air flow with a temperature higher than that of the ambient atmosphere to the elastic fiber foam, thereby the molded elastomer tranferred from the elastic fiber foam is obtained.
The elastic fiber foam (100) is disposed on the platen (210) and a portion of the elastic fiber foam (100) covers the gap (212) and is located within the first space (240).
By moving the first lower mold (230) upward, the first low mold (230) passes through the gap (212) and touches against the elastic fiber foam which is deformed.

## Description

### Field of the Invention

The present invention generally relates to molded elastomers and, more particularly, to molded elastomers made from elastic fiber foams.

### Background of the Invention

Elastic fiber foams used in textile industry are generally made from polyurethane due to its advantage of high resilience. However, the disadvantages of yellowing due to aging, worse air-permeability and recycle complexity of polyurethane elastic fiber foams are very difficult to overcome. Thus, in recent years, new kinds of elastic fiber foams like polyester have been gradually developed for substituting polyurethane elastic fiber foams.

Molding presses are commonly utilized in transforming polyester elastic fiber foams into molded elastomers, such as bra cups, insoles, or mattresses. The molding presses typically include metal molds, which can be heated to a high temperature to press the polyester elastic fiber foams into molded elastomers. However, the molded elastomers by such conventional methods usually fail to satisfy the customers needs due to the dimensional in-stability, i.e. the resulted molded shapes can not last for a longer time. Thus, it would be desirable to devise a novel method and apparatus to resolve the problem in molding polyester elastic fiber foams.

### Summary of the Invention

One aspect of the present invention is to provide a method for making a molded elastomer. The method includes steps of providing an elastic fiber foam; disposing the elastic fiber foam between a first upper mold and a first lower mold; pressing the elastic fiber foam by the first upper mold and the first lower mold; and applying a first air flow to the elastic fiber foam, the first air flow having a temperature higher than an ambient temperature, such that the molded elastomer is transferred from the elastic fiber foam.

A further aspect of the present invention is to provide a method for making a molded elastomer. The method includes steps of providing an elastic fiber foam; disposing the elastic fiber foam between a first upper mold and a first lower mold; pressing the elastic fiber foam by the first upper mold and the first lower mold; applying a first air flow to the elastic fiber foam, the first air flow having a temperature higher than an ambient temperature; and applying a second air flow to the elastic fiber foam, the second air flow having a temperature lower than the temperature of the first air flow, such that the molded elastomer is transferred from the elastic fiber foam.

A still further aspect of the present invention is to provide a method for making a molded elastomer. The method includes steps of providing an elastic fiber foam; disposing the elastic fiber foam between a first upper mold and a first lower mold; pressing the elastic fiber foam by the first upper mold and the first lower mold; applying a first air flow to the elastic fiber foam, the first air flow having a temperature higher than an ambient temperature; applying a second air flow to the elastic fiber foam, the second air flow having a temperature lower than the temperature of the first air flow; displacing the elastic fiber foam between a second upper mold and a second lower mold; and pressing the elastic fiber foam by the second upper mold and the second lower mold, such that the molded elastomer is transferred from the elastic fiber foam.

Another aspect of the present invention further include providing molded elastomers with high degrees of dimensional and shape stability obtained by the above methods.

### Brief Description of the Drawings

FIG. 1 shows an elastic fiber foam for a raw material of the present invention.

FIGs. 2A-2B respectively shows an apparatus for making a molded elastomer in accordance with the present invention.

FIG. 3 shows a conventional molding press.

FIG. 4 shows some molded elastomers manufactured by the methods in accordance with the present invention.

### Detailed Description

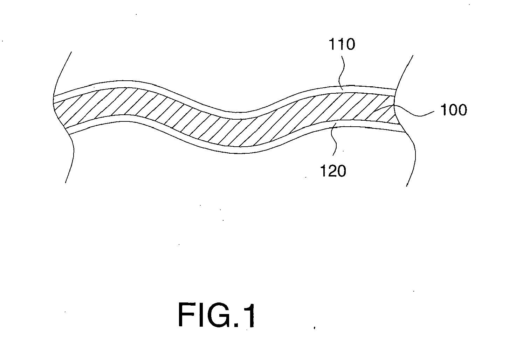

FIG. 1 shows an elastic fiber foam 100 used as a raw material of the present invention. The elastic fiber foam 100 essentially consists of thermoplastic elastic fibers. The elastic fiber foam 100 can be made by any type of thermoplastic elastic fibers, including but not limited to polyester. Specifically, in a preferred embodiment of the present invention, the elastic fiber foam 100 is made up of polyester elastic fibers essentially containing low melt-point PET (polyethylene terephthalate) fibers and self-crimp PET fibers, wherein the weight % of the low melt-point PET fibers is between 30 % to 70 % of the total weight of the low melt-point PET elastic fibers and the self-crimp PET elastic fibers. The self-crimped PET fibers play the significant role to affect the elasticity, firmness and thickness of the elastic fiber foam 100. In addition to thermoplastic elastic fibers, the elastic fiber foam 100 optionally contains a small amount of non-elastic fibers for the purpose of other desired properties, such as strength reinforcement, germ resistance, or hydro-absorption. The process of making the elastic fiber foam 100 typical includes mixing all the fibers; opening the fibers by a fiber opening machine; sending the opened fibers to a carding machine to card the fibers into a continuous and even fiber net layer; folding the fiber net layer to be a 90 degree perpendicular stacked status by a folding machine; sending the fiber net layer to an oven and heating the fiber net layer by a compressed hot air in 150°C to 200°C, so that the self-crimp PET fiber is twisted and jointed with the low melt PET fibers to form the elastic fiber foam 100. The other detailed compositions and properties with respect to the elastic fiber foam 100 have been described in Taiwan Patent No. 567046, incorporated here on its entirety by reference. Besides, the elastic fiber foam 100 optionally combines with fabrics 110, 120. As shown in FIG. 1, the fabric 110 or 120 can be any kind of knitted fabrics. It should be noted that the elasticity property of the elastic fiber foam100 can not be significantly affected by the combination with the fabric 110 or 120.

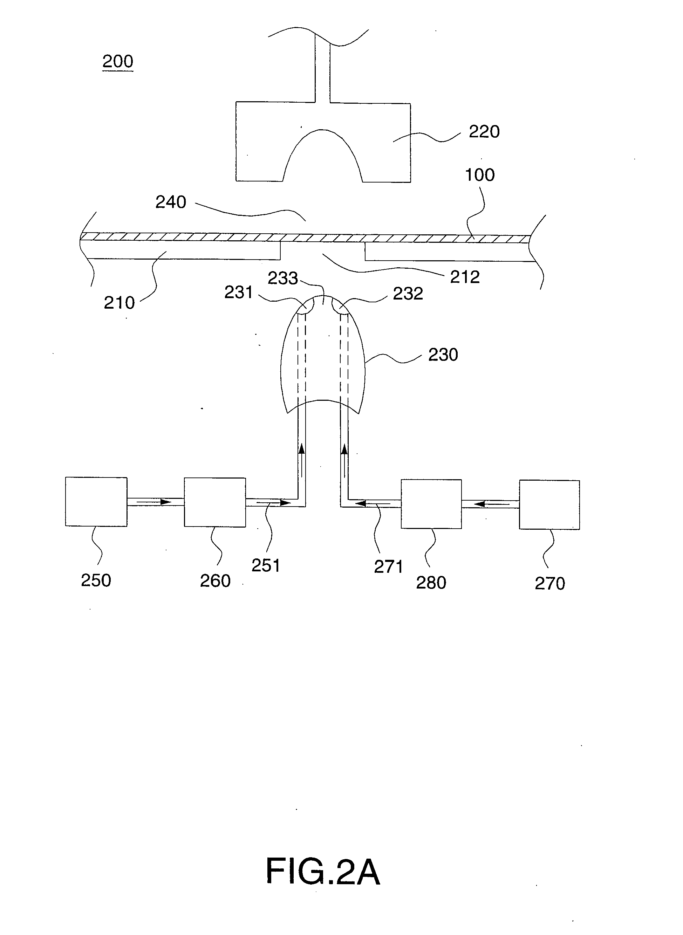

FIG. 2A shows an apparatus 200 for making a molded elastomer in accordance with the present invention. As shown in FIG. 2A, the apparatus 200 includes a platen 210, a first upper mold 220 located above the platen 210, and a first lower mold 230 located below the platen 210. The platen 210 forms a gap 212 for allowing the first lower mold 230 to shuttle therein while moving up and down periodically. The first upper mold 220 and the first lower mold 230 form a first space 240. The elastic fiber foam 100 is disposed on the platen 210 and a portion of the elastic fiber foam 100 covers the gap 212 and is located within the first space 240. By moving the first lower mold 230 upward, the first lower mold 230 passes through the gap 212 and touches against the elastic fiber foam 100. At the end of the stroke, the first lower mold 230 molds with the first upper mold 220 while the elastic fiber foam 100 is deformed.

As shown in FIG. 2A, the apparatus 200 further includes a first air blowing device 250 for producing a first air flow 251. When the elastic fiber foam 100 is pressed by the first upper mold 220 and the first lower mold 230, the first air flow 251 is applied to the elastic fiber foam 100 to facilitate the molding of the elastic fiber foam 100. Besides, the apparatus 200 further includes a heating device 260, connected to the first air blowing device 250, for heating the first air flow 251 prior to being applied to the elastic fiber foam 100.

As shown in FIG. 2A, in addition to the first air blowing device 250 and the heating device 260, the apparatus 200 still optionally includes a second air blowing device 270 for applying to the elastic fiber foam 100 and a cooling device 280 for cooling the second air flow 271 prior to being applied to the elastic fiber foam 100. The second air flow 271 is used to rapidly cool the heated elastic fiber foam100 due to the first air flow 251.

Further referring to FIG. 2A, the first lower mold 230 forms a first opening 231 and a second opening 232 on the surface 233 contacting with the elastic fiber foam 100. The first air flow 251 is applied through the first opening 231 and the second air flow 271 is applied through the second opening 232. It should be appreciated by one skilled in the art that the first opening 231 and the second opening 232 can also be provided in the first upper mold 220, or any other suitable device in the apparatus 200.

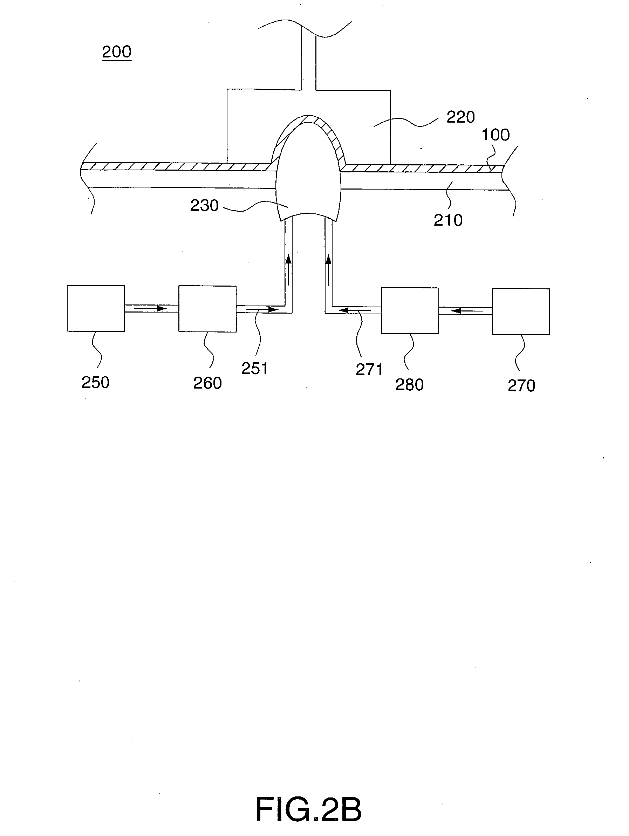

FIGs. 2A and 2B illustrate a method for making a molded elastic elastomer in accordance with the present invention. As shown in FIG. 1, the method includes providing the elastic fiber foam 100; disposing the elastic fiber foam 100 between the first upper mold 220 and the first lower mold 230; pressing the elastic fiber foam 100 by the first upper mold 220 and the first lower mold 230; and applying the first air flow 251 to the elastic fiber foam 100. The temperature of the first air flow 251 applied to the elastic fiber foam 100 is substantially higher than the ambient temperature during operations. The preferred temperature of the first air flow 251 is in a range between 100°C to 250°C. However, the specific temperature of the first air flow 251 depends on the properties of the elastic fiber foam 100. Furthermore, the time of pressing the elastic fiber foam 100 and the time of applying the first air flow 251 are also functions of particular properties of the selected elastic fiber foam 100. According to certain embodiments of the present invention, the preferred time is in a range between 1 second to 60 seconds.

After the first air flow 251 is applied, the second air flow 271 can be utilized to rapidly cool the elastic fiber foam 100. The temperature of the second air flow 271 is controlled by the cooling device 280 for keeping the temperature of the second air flow 271 lower than that of the first air flow 251, with a preferred range between 10°C to 35°C in accordance with embodiments of the present invention. Likewise, the specific temperature of the second air flow 271 during practices can vary depending on the selected elastic fiber foam 100. Furthermore, the preferred time of applying the second air flow 271 is in a range between 1 second and 60 seconds in accordance with embodiments of the present invention while the specific temperature during practices can vary with the selected elastic fiber foam 100. It should be noted that this cooling step is optional. In some other embodiments, the heated elastic fiber foam 100 can be naturally cooled down.

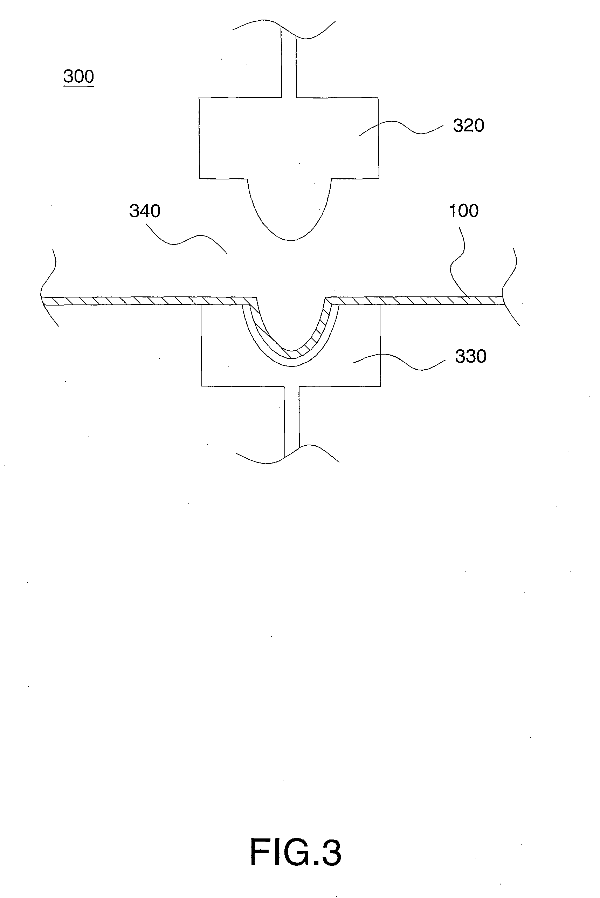

As shown in FIG. 3, optionally, the method of the present invention further provides a step of post-pressing the resulted elastic fiber foam, already pressed by the first upper mold 220 and the first lower mold 230 together with the applications of first or second air flow 251/271, by a conventional molding press 300 for enhancing the dimensional stability. This step is optional depending on the properties of elastic fiber foam 100.

As shown in FIG. 3, the molding press 300 includes a second upper mold 320 and a second lower mold 330, both of which are made of metal and are heatable. The second upper mold 320 and the second lower mold 330 forms a second space 340 for receiving the elastic fiber foam 100 which is the product from the operation of pressing the first upper mold 220 and the first lower mold 230. The molding press 300 does not include the first air blowing device 250 or the second air blowing device 270. As aforementioned, the pressing mold 300 is utilized for post-pressing the elastic fiber foam 100, depending on the specific property of the selected elastic fiber foam 100. Therefore, the pressing mold 300 can be selectively provided in the apparatus 200. The detailed structures and functions of the molding press 300 was disclosed in Taiwan Patent Application No. 094122835 filed by the applicant of the present invention, incorporated here on its entirety by reference.

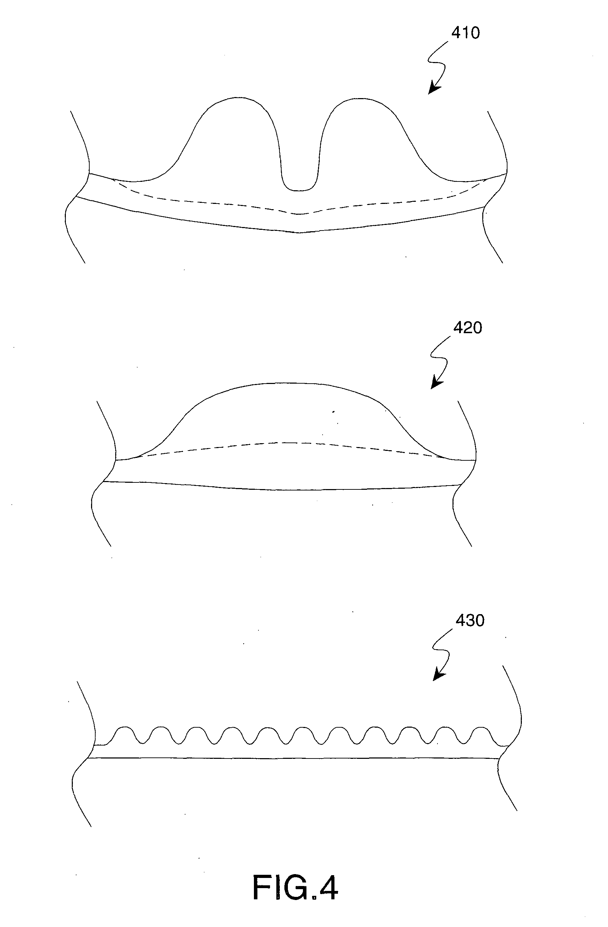

According to certain preferred embodiments of the present invention, the molded elastomers obtained by the aforementioned methods provide the functions of anti-yellowing, breezy, super light & soft, high-absorbent, high degrees of dimensional and shape stability, wrinkle-free as well as environmental friendly. FIG. 4 illustrates the molded elastomers transferred from the elastic fiber foam 100 by the method as described above. The molded elastomer 410 is for a bra padding, such as a push-up pad disclosed in US Patent Application Publication No. 2005/0164602 by Armstrong, incorporated herein by reference. The molded elastomer 420 is for a shoulder pad, and the molded elastomer 430 is for a slip resistant pad. The dotted lines in FIG. 4 show lines for the subsequent cutting procedures.

The present invention has been described above with reference to preferred embodiments. However, those skilled in the art can understand that the scope of the present invention need not be limited to the disclosed preferred embodiments. On the contrary, it is intended to cover various modifications and equivalent arrangements within the scope defined in the following appended claims. The scope of the claims should be accorded the broadest interpretation so as to encompass all such modifications and equivalent arrangements.

## Claims

1. A method for making a molded elastomer, said method comprising steps of:
(a) providing an elastic fiber foam;
(b) disposing said elastic fiber foam between a first upper mold and a first lower mold;
(c) pressing said elastic fiber foam by said first upper mold and said first lower mold; and
(d) applying a first air flow to said elastic fiber foam, said first air flow having a temperature higher than an ambient temperature, such that said molded elastomer is transferred from said elastic fiber foam.

2. The method of Claim 1, further comprising a step of:
(e) applying a second air flow to said elastic fiber foam, said second air flow having a temperature lower than said temperature of said first air flow.

3. The method of Claim 1, further comprising a step of:
(f) disposing said elastic fiber foam resulted from Step (d) between a second upper mold and a second lower mold, and pressing said elastic fiber foam by said second upper mold and said second lower mold.

4. The method of Claim 1, wherein said first air flow is applied through a first opening selectively located in said first upper mold or said first lower mold.

5. The method of Claim 2, wherein said second air flow is applied through a second opening located in said first upper mold or said first lower mold.

6. The method of Claim 1, wherein said elastic fiber foam comprises polyester elastic fibers.

7. The method of Claim 6, wherein said polyester elastic fibers comprises low melt-point PET elastic fibers and self-crimp point PET elastic fibers, said low melt-point PET elastic fibers having a weight % between 30% to 70% based on the total weight of said low melt-point PET elastic fibers and said self-crimp PET elastic fibers.

8. The method of Claim 1, wherein said molded elastomer is used for a bra padding.

9. A molded elastomer obtained by the method of Claim 1.

10. An apparatus for making a molded elastomer, said apparatus comprising:
a first upper mold and a first lower mold, said first upper mold and said first lower mold forming a first space for receiving an elastic fiber foam pressed by said first upper mold and said first lower mold;
a first air blowing device for producing a first air flow applied to said elastic fiber foam; and
a heating device, connected to said first air blowing device, for heating said first air flow prior to being applied to said elastic fiber foam.

11. The apparatus of Claim 10, further comprising:
a second air blowing device for producing a second air flow applied to said elastic fiber foam; and
a cooling device, connected to said second air blowing device, for cooling said second
air flow prior to being applied to said elastic fiber foam.

12. The apparatus of Claim 10, further comprising:
a second upper mold and a second lower mold, said second upper mold and said second lower mold forming a second space for receiving said elastic fiber foam being pressed by said first upper mold and said first lower mold.

13. The apparatus of Claim 10, wherein said first air flow is applied through a first opening selectively located in said first upper mold or said first lower mold.

14. The apparatus of Claim 10, wherein said second air flow is applied through a second opening selectively located in said first upper mold or said first lower mold.

15. The apparatus of Claim 10, wherein said molded elastomer is used for a bra padding.
